# EUROPEAN PATENT APPLICATION

(11) **EP 0 949 491 A1**
(43) Date of publication of application: **13.10.1999**
(21) Application number: 98400830.0
(22) Date of filing: 07.04.1998
(51) Int. Cl.: G01J 5/12, G01K 17/00

(54) **A detector device including Peltier effect thermoelectric module**

(71) Applicant: IMRA EUROPE S.A., F-06560 Valbonne (FR)
(72) Inventor: Ancey, Pascal, 06130 Grasse (FR); Fontaine, Jean-Pierre, 06600 Antibes (FR); Gschwind, Michel, 06130 Plascassier (FR); Ishihara, Kunio, 06600 Antibes (FR)
(74) Representative: Leszczynski, André

(57) **Abstract**

A detector device comprising a Peltier effect thermoelectric module (1_{d}) for heating or cooling a detection surface, and a power supply (7_{d}) for powering said thermoelectric module in such a manner as to cause the temperature of said detection surface to oscillate.

The detector device comprises analysis means (9) for detecting a transfer of energy contributing to accelerating or slowing down the rate of heating or cooling of the detection surface on the basis of comparing a reference signal with a signal representative of the manner in which the detection surface cools down or heats up.

## Description

The present invention relates to the field of detector devices implementing the Peltier effect for heating or cooling a detection surface.

A detector device of this type, e.g. used for detecting a risk of mist forming on a vehicle windscreen, is described in European patent EP-A-0 613 000 in the name of the Applicant company.

Detection performed by that device is based on the principle of causing the temperature of the detection surface to oscillate by means of a Peltier effect thermoelectric module, and in analyzing the appearance of the oscillations in order to detect energy transfer at the detection surface, with such transfer giving rise to a change in the durations of the heating and cooling phases.

This energy transfer can be positive or negative.

Thus, energy delivered to the detection surface while it is being cooled, due to latent heat being released by condensation forming thereon, increases the duration of the cooling phase.

Similarly, by absorbing energy and evaporating during heating of the detection surface, condensation lengthens the duration of the heating phase.

Known devices are sufficiently sensitive to detect a risk of mist forming.

Nevertheless, there exists a need for a detector device that presents greater sensitivity than known devices, and that is suitable in particular for measuring a very small input of energy to the detection surface, e.g. energy from incident radiation.

The invention thus provides a novel detector device comprising a Peltier effect thermoelectric module for heating or cooling a detection surface and a power supply for powering said thermoelectric module in such a manner as to cause the temperature of said detection surface to oscillate, the detector device being characterized by the fact that it comprises analysis means for detecting a transfer of energy at the detection surface contributing to accelerating or slowing down its heating or cooling, responsive to a comparison of a reference signal and of a signal representative of the manner in which the detection surface cools or heats.

In an embodiment of the invention, the reference signal comes from simulating an electrical magnitude across the terminals of a virtual Peltier effect thermoelectric module organized to heat or cool a reference circuit and connected to a power supply organized to cause the temperature of the reference circuit to oscillate.

In another embodiment of the invention, the reference signal comes from measuring an electrical magnitude across the terminals of a second Peltier effect thermoelectric module organized to heat or cool a reference surface and connected to a power supply organized to cause the temperature of the reference circuit to oscillate.

The detector device of the invention turns out to be very sensitive and can be used, for example, to measure the energy of an incident beam.

The device of the invention is also suitable for measuring an emission of energy by the detection surface, e.g. heat radiated or energy absorbed by an endothermal reaction.

In an embodiment of the invention, the reference signal is a voltage and the analysis means are organized to compare the voltage across the terminals of the thermoelectric module associated with the detection surface and the reference signal.

The frequency of temperature oscillations at the detection surface and the frequency of temperature oscillations at the (real or virtual) reference surface may be fixed or variable.

The analysis means may be organized to generate an error signal, and the detection device may include means for modifying the electrical power supply to the Peltier effect thermoelectric module associated with the detection surface and/or the power supply of the means used to generate the reference signal, in such a manner as to tend to cancel the error signal.

The means used for modifying the electrical power supply can modify the amplitude of the electrical current, or in a variant its duty ratio.

When using two Peltier effect thermoelectric modules, a transfer of energy to the detection surface can be detected by comparing the durations of cooling and/or heating of the detection surface and of the reference surface. In the absence of energy transfer at said detection surface, the reference surface preferably has the same heating and cooling durations as the detection surface. The analysis means are thus organized to generate an error signal representative of a difference between the heating and/or cooling durations of the detection surface and of the reference surface. The detector device can include means for modifying the current delivered to one of the thermoelectric modules as a function of the error signal and in a direction tending to cancel said error signal. The current can be modified by acting on its amplitude or by acting on its duty ratio, with the current then being of constant amplitude. Depending on the way in which the current delivered by the power supply is modified, it is possible to quantify the energy received by the detection surface.

When the reference signal comes from simulating an electrical magnitude across the terminals of a virtual Peltier effect thermoelectric module, the device advantageously comprises a temperature-sensitive component placed in the vicinity of the Peltier effect thermoelectric module, preferably in thermal contact with a thermal mass associated with said thermoelectric module, and an electronic circuit connected to said temperature-sensitive component and organized to compensate a variation in the mean temperature of the Peltier effect thermoelectric module.

The detector device of the invention can advantageously be used to measure heat flux.

Other characteristics and advantages of the present invention appear on reading the following detailed description of non-limiting embodiments of the invention, and on examining the accompanying drawings, in which:
- Figure 1 is a diagram of the detection surface constituted by one face of an electric junction between two thermoelectric elements;
- Figure 2 is a block diagram of a detector device constituting an embodiment of the invention;
- Figure 3 is a waveform diagram showing the appearance of the current flowing through the thermoelectric elements;
- Figure 4 is a waveform diagram showing how the temperature of the detection surface varies in the absence of any energy transfer thereat;
- Figure 5 is a waveform diagram showing how the heating duration and the cooling duration of the detection surface is caused to vary by energy being applied thereto;
- Figure 6 is a waveform diagram showing the appearance of the current flowing through the thermoelectric elements in the presence of energy being applied to the detection surface, and in the absence of such applied energy;
- Figure 7 is a waveform diagram showing the appearance of the error signal;
- Figure 8 is a waveform diagram showing the appearance of the current before and after the error signal has been cancelled;
- Figure 9 is a diagram of an electronic circuit generating a reference signal without compensation for variations in mean temperature;
- Figure 10 shows a configuration in which the circuit of Figure 9 is used for generating a reference signal with compensation for variations in mean temperature; and
- Figure 11 shows a configuration in which temperature drift of the Peltier effect thermoelectric module is compensated for comparison with the reference signal from the circuit of Figure 9.

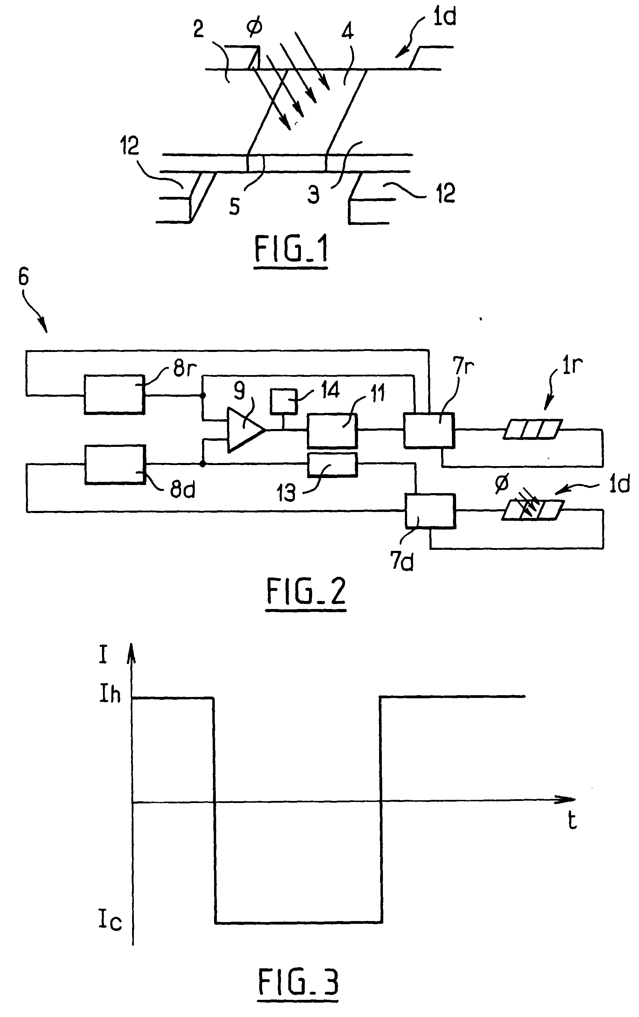

The thermoelectric module 1_{d} shown in Figure 1 is of any type known per se, comprising a semiconductor thermoelectric element 2 of N type and a semiconductor thermoelectric element 3 of P type, which elements are electrically connected in series via an electric junction 4.

Each of the elements 2, 3 is in thermal contact with a thermal mass 12 at its end remote from the junction 4.

The face 5 of the junction 4 having high emissivity serves as a detection surface, and in the example described it is suitable for receiving an incident beam φ whose energy is to be discovered.

Figure 2 shows a detector device 6 of the invention.

In the detector device 6, the thermoelectric module 1_{d} is connected to a power supply 7_{d} which delivers alternating current thereto causing the electric junction 4 to be successively heated and cooled.

For the purposes of clarifying the description, it is assumed that the current alternates as a squarewave as shown in Figure 3, however it would not go beyond the ambit of the invention to cause the current to vary in some other manner.

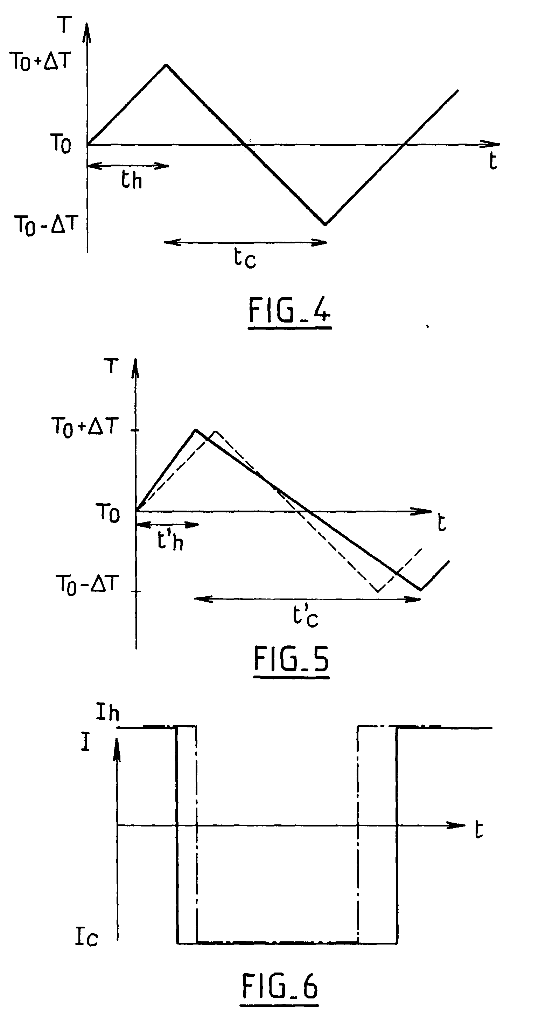

Under the effect of the alternating current passing through the thermoelectric elements 2 and 3, the temperature of the detection surface 5 oscillates about a mean value T₀ between a high value T₀ + ΔT and a low value T₀ - ΔT, as shown in Figure 4.

On examining Figure 3, it will be observed that the amplitude I_{c} of the current that gives rise to cooling of the detection surface 5 is slightly greater (in absolute value) than the amplitude Iₕ of the current that gives rise to heating thereof, in order to compensate for the heating due to the Joule effect.

In Figure 4, t_{H} specifies the duration required for raising the detection surface 5 from temperature T₀ to temperature T₀ + ΔT and t_{c} designates the duration required for passing from temperature T₀ + ΔT to temperature T₀ - ΔT.

Detector means 8_{d} connected to the thermoelectric module 1_{d} and to the power supply 7_{d} are provided to detect the instant at which the temperature of the detection surface 5 reaches one or other of the thresholds T₀ + ΔT and T₀ - ΔT.

This detection is performed in conventional manner by measuring the Seebeck voltage across the terminals of the thermoelectric module 1_{d}.

The power supply 7_{d} is controlled by control means 13 which, whenever one of the temperature thresholds T₀ + ΔT or T₀ - ΔT is detected, causes the delivered current to be inverted.

In Figure 5, continuous lines show the appearance of temperature oscillations at the detection surface 5 in the presence of an incident beam φ, while dashed lines show the appearance of temperature oscillations when there is no incident flux.

When the detection surface 5 is subjected to energy input, due in the example described to the action of the incident beam φ, this input of energy contributes to heating the electric junction 4 such that at constant heating current amplitude Iₕ, the time required to reach the temperature T₀ + ΔT is shortened to t'ₕ which is less than tₕ.

Similarly, the energy input from the incident beam φ tends to oppose cooling of the detection surface, such that for constant cooling current amplitude I_{c}, the time t'_{c} needed to reach the temperature T₀ - ΔT becomes greater than t_{c}.

Figure 6 has continuous lines showing the appearance of the current flowing through the thermoelectric module 1_{d} in the presence of the incident beam φ, while discontinuous lines show the appearance of the current in the absence of incident flux.

The detector device 6 also includes a second thermoelectric module 1ᵣ identical to the thermoelectric module 1_{d} as described above and serving to cool or heat a reference surface which differs from the detection surface 5 solely by the fact that it is not subject to energy input from an incident beam φ, either because its surface exposed to the beam has low emissivity, or because a protective screen is disposed between the beam and the module 1ᵣ.

The thermoelectric module 1ᵣ which serves as a reference is connected to a power supply 7ᵣ and to detector means 8ᵣ which monitor the Seebeck voltage across its terminals and deliver a reference signal.

Control means 11 co-operate with the detector means 8ᵣ and the power supply 7ᵣ to cause the temperature of the reference surface to oscillate between the same values T₀ - ΔT and T₀ + ΔT as the detection surface.

The detector device 6 also includes analysis means 9 responsive to the signals delivered by the detector means 8ᵣ and 8_{d} to compare the durations of the heating and cooling phases of the electric junctions in each of the thermoelectric modules 1_{d} and 1ᵣ, and to output an error signal ε to the control means 11, where ε represents the difference between the durations of the heating phases of the two thermoelectric modules 1_{d} and 1ᵣ, and then the difference between the durations of their cooling phases.

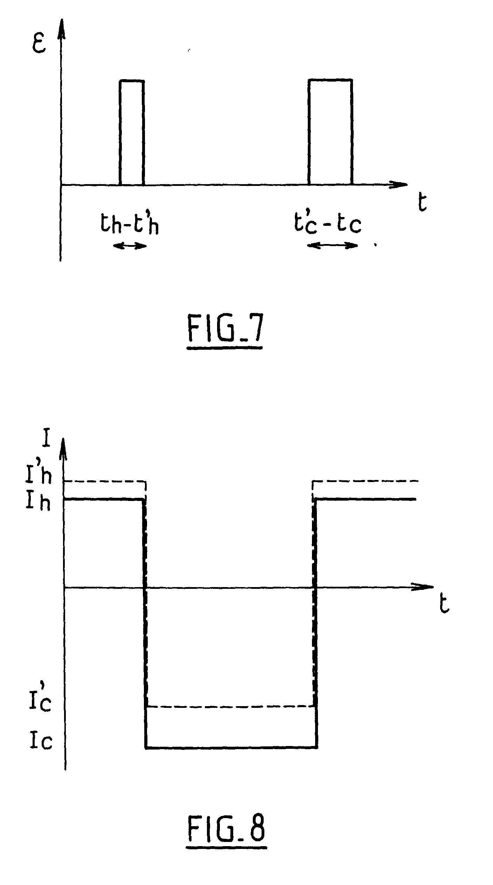

By way of example, the error signal ε may be in the form of a binary signal whose pulses occupy level 1 for a duration equal to tₕ - t'ₕ and then equal to t'_{c} - t_{c}, as shown in Figure 7.

The control means 11 of the power supply 7ᵣ are organized to control the power supply so as to modify the amplitudes of the current pulses passing through the thermoelectric module as a function of the values of the error signal ε.

When the detection surface 5 of the thermoelectric module 1_{d} is not receiving any incident beam φ, then both thermoelectric modules 1ᵣ and 1_{d} are operating under the same conditions so the error signal ε is zero.

The amplitudes of the current pulses delivered by the power supply 7ᵣ remain unchanged.

In contrast, when the detection surface 5 of the thermoelectric module 1_{d} receives incident flux φ, then the appearance of the current pulses delivered by the power supply 7ᵣ is changed.

More precisely, the current pulse of amplitude Iₕ that heats the electric junction 4 of the thermoelectric module 1_{d} comes narrower and the current pulse of amplitude I_{c} that cools it becomes broader, as shown in Figure 6.

It will be understood that if it is desired that the durations of heating and cooling applied to the electric junction of the thermoelectric module 1ᵣ are respectively equal to the corresponding durations of the thermoelectric module 1_{d} when the module 1_{d} is subjected to an input of energy from the incident beam φ, then it is necessary, for example, to increase the amplitude I'ₕ of the current delivered by the power supply 7ᵣ for heating the reference surface and to increase the amplitude of the current pulse delivered by the same power supply to cool the reference surface.

In the example described, the control means 11 control the power supply 7ᵣ so that the electric junction of the thermoelectric module 1ᵣ is heated using a current of amplitude I'ₕ greater than Iₕ and is cooled using a current of amplitude I'_{c} that is smaller (in absolute value) than I_{c}.

The thermoelectric module 1ᵣ that receives the current of amplitude I'ₕ greater than Iₕ therefore rises in temperature more quickly, and as a result the duration t'ₕ can be equal to the duration tₕ for heating the thermoelectric module 1_{d} which is subjected to energy from the incident beam φ.

The current of amplitude I'_{c} which is smaller (in absolute value) than I_{c} causes the thermoelectric module 1ᵣ to cool more slowly, such that for a particular value of the amplitude I_{c}, the duration t'_{c} can be made equal to the duration t_{c}.

In Figure 8, dashed lines show the appearance of the current pulses passing through the thermoelectric module 1ᵣ and continuous lines show the appearance of current pulses passing through the thermoelectric module 1_{d} once the error signal ε has been cancelled.

Naturally, it does not go beyond the ambit of the invention to leave the amplitudes I'_{c} and I'ₕ of current passing through the thermoelectric module 1ᵣ unchanged and to modify the amplitudes I_{c} and Iₕ of the current passing through the thermoelectric module 1_{d}.

Under such circumstances, when the detection surface 5 receives incident flux φ, it is necessary to reduce the amplitude Iₕ of current passing through the thermoelectric module 1_{d} during the heating period and to increase the amplitude (in absolute value) I_{c} of the current that passes during the cooling period in order to maintain heating and cooling durations that are the same as those of the reference surface of the thermoelectric module 1ᵣ which does not receive the incident flux φ.

The modification of the amplitudes I'ₕ and I'_{c} of the current delivered to the thermoelectric module 1ᵣ for the purpose of canceling the error signal ε in the presence of energy input to the detection surface 5 makes it possible to quantify the energy input.

Appropriate storage and calculation means 14 can be provided to process the error signal ε in order to deliver information relating to the energy of the incident beam φ.

These storage and calculation means are easily implemented by the person skilled in the art as a function of the application for which the detector device 6 is intended, and they are not described in greater detail in order to clarify the description.

In the above description, given with reference to Figures 1 to 8, the detector device uses a second Peltier effect thermoelectric module 1ᵣ to produce the reference signal.

Nevertheless, in order to reduce the cost of manufacturing the device, it can be advantageous to avoid using a second Peltier effect thermoelectric module and instead merely to simulate its behavior by means of an appropriate electronic circuit.

In other words, the second Peltier effect thermoelectric module 1ᵣ can be virtual instead of being real.

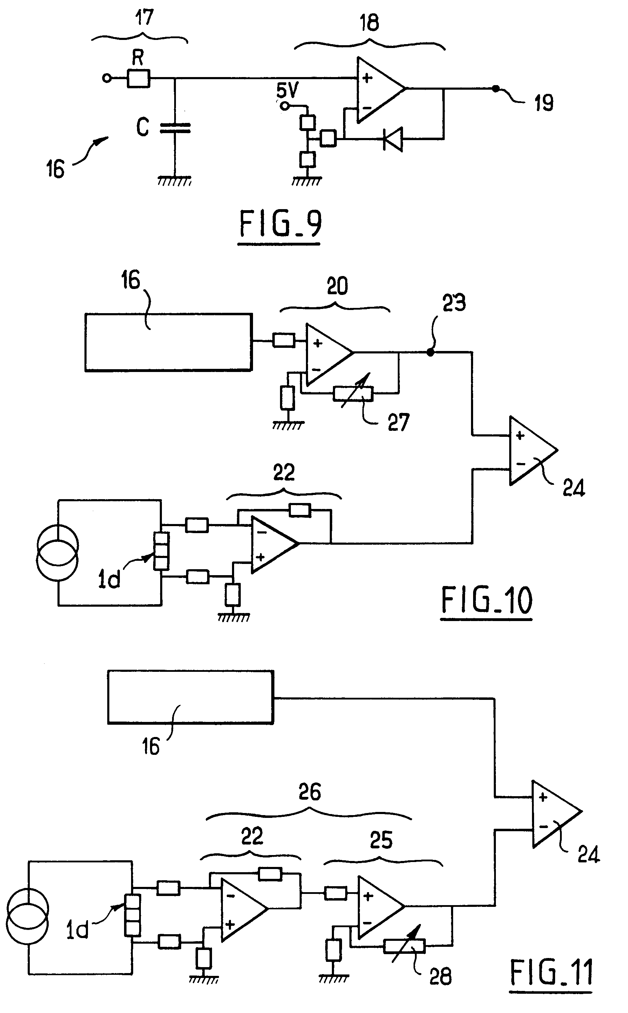

Figure 9 shows an example of an electronic circuit 16 suitable for simulating the voltage delivered by a Peltier effect thermoelectric module for a given power supply current input to said circuit.

In general, the voltage across the terminals of a Peltier effect thermoelectric module is made up of a resistive component and a Seebeck component.

The circuit 16 must therefore simulate the resistive component and the Seebeck component.

The circuit 16 comprises an RC first portion 17 generating the equivalent of the Seebeck component of the reference signal, and a second portion 18 constituted by an operational amplifier and resistors, suitable for generating the equivalent of the resistive component of the reference signal.

At the output 19 from this circuit, a reference signal is obtained having an amplitude of about 5V.

In the configuration of Figure 10, the circuit 16 of Figure 9 is associated with a second circuit 20, constituted by an operational amplifier and resistors, and including a thermistor 27 integrated in a thermal mass 12 associated with the thermoelectric module 1_{d}, said circuit 20 being connected in series with the circuit 16 to cause the signal delivered by the terminal 19 to vary as a function of changes in the temperature of the thermal mass 12, in such a manner that the reference signal simulated at the output 23 of the second circuit 20 varies like the signal delivered by the thermoelectric module 1_{d} in the event of drift in the mean temperature thereof.

In this case, the circuit 20 is an amplifier circuit of variable gain, and its gain varies with the temperature of the thermal mass 12.

The voltage across the terminals of the thermoelectric module 1_{d} is amplified by an amplifier circuit 22 whose sole function is to bring the amplitude of the measurement signal to a value that is comparable with the value of the reference signal at the output 23 of the circuit 20.

The voltage delivered by the thermoelectric module 1_{d} is applied, after amplification by the circuit 22, to one of the inputs of analysis means 24 which are constituted in this case by a differential amplifier.

The differential amplifier delivers a signal which can then be used to determine the (positive or negative) energy contribution to the detection surface. In the configuration in Figure 11, a second circuit 25 constituted by an operational amplifier and resistors, including a thermistor 28 integrated in a thermal mass 12, is connected in series with the amplifier circuit 22 to compensate the effects on the voltage measured across the terminals of the thermoelectric module 1_{d} of changes in the temperature of the thermal mass 12.

In this case, the circuit 25 is an amplifier circuit of variable gain in which gain decreases with increasing temperature of the thermal mass on which the thermistor is mounted.

Consequently, in this configuration, the differential amplifier 24 compares two signals that are not subject to the temperature changes of the thermal mass 12.

It will be observed that the configuration of Figure 11 is advantageous since it requires a small number of components, particularly if the fixed gain amplifier circuit 22 is combined with the variable gain amplifier circuit 25 in a single variable gain amplifier circuit 26.

The detector device of the invention turns out to be very sensitive.

Naturally, without going beyond the ambit of the invention, it is possible to use it for measuring an energy input to the detection surface that takes place by means other than radiation.

In addition, because of the succession of heating and cooling periods at the electric junction(s) of the thermoelectric module(s), the overall balance of energy interchange between the junction(s) by radiation, conduction, or convection and the environment thereof is zero, such that the detector device can be used to perform measurements of the radiation temperature of an object over a long period of time without thereby modifying its temperature.

In the embodiment described with reference to Figures 1 to 8, the current flowing through one of the thermoelectric modules is modified for the purpose of making equal the heating and cooling durations of the detection surface and of the reference surface.

Current can be modified as described above by varying the amplitudes of the current pulses flowing through one of the thermoelectric modules.

In an embodiment (not shown), action is taken on the duty ratio of the current pulses instead of on their amplitudes.

Under such circumstances, the amplitude of the current remains equal to a predetermined value during the heating phase or during the cooling phase, and the ratio of the duration of the heating current pulse to the duration of the cooling current pulse is varied.

One of the thermoelectric modules may carry current at fixed frequency and duty ratio while the other thermoelectric module can carry current at fixed frequency but variable duty ratio, said duty ratio being constantly adjusted so that the temperature oscillations of the detection surface and of the reference surface take place between the same extreme temperatures.

The duty ratio can be adjusted by acting directly on the power supply to modify the duration of the positive and negative pulses, or, if the power supply reverses the direction of current flow each time a threshold voltage is reached across the terminals of the associated thermoelectric module, by modifying the value of said threshold voltage.

Without going beyond the ambit of the present invention, it is also possible to power the thermoelectric modules with predetermined oscillating currents at the same frequency and compare the variation in temperature between the detection surface and the reference surface by measuring the voltages across the terminals of each of the thermoelectric modules, and to deduce therefrom information relating to the energy transferred to the detection surface.

Under such circumstances, the currents are not modified as a function of an error signal.

## Claims

1. A detector device comprising a Peltier effect thermoelectric module (1_{d}) for heating or cooling a detection surface (4), and a power supply (7_{d}) for powering said thermoelectric module in such a manner as to cause the temperature of said detection surface to oscillate, the detector device being characterized by the fact that it comprises analysis means (9; 24) for detecting a transfer of energy contributing to accelerating or slowing down the rate of heating or cooling of the detection surface on the basis of comparing a reference signal with a signal representative of the manner in which the detection surface cools down or heats up.

2. A device according to claim 1, characterized by the fact that the reference signal comes from simulating an electrical magnitude across the terminals of a virtual Peltier effect thermoelectric module (16) organized to heat or cool a reference circuit and connected to a power supply organized to cause the temperature of the reference circuit to oscillate.

3. A device according to claim 2, characterized by the fact that it comprises a temperature-sensitive component (27; 28) placed in the vicinity of the Peltier effect thermoelectric module (1_{d}), and an electronic circuit connected to said temperature-sensitive component and organized to compensate variation in the mean temperature of the Peltier effect thermoelectric module.

4. A device according to claim 1, characterized by the fact that the reference signal comes from measuring an electrical magnitude across the terminals of a second Peltier effect thermoelectric module (1ᵣ) organized to heat or cool a reference surface and connected to a power supply organized to cause the temperature of the reference circuit to oscillate.

5. A detector device according to claim 4, characterized by the fact that the first and second thermoelectric modules (1_{d}, 1ᵣ) are identical, apart from the fact that the second thermoelectric module is not subjected to the energy of the incident flux φ.

6. A detector device according to claim 4 or 5, characterized by the fact that the second thermoelectric module (1ᵣ) presents a face exposed to the incident flux having low emissivity or is protected from the incident flux by a protective screen.

7. A detector device according to any preceding claim, characterized by the fact that the thermoelectric module (1_{d}) associated with the detection surface has a face of high emissivity which serves as the detection surface.

8. A detector device according to any preceding claim, characterized by the fact that the reference signal is a voltage, and by the fact that said analysis means (9; 24) are organized to compare the reference signal with the voltage across the terminals of the thermoelectric module associated with the detection surface.

9. A detector device according to any preceding claim, characterized by the fact that the analysis means (9; 24) are organized to generate an error signal, and by the fact that the detector device includes means for modifying the electrical power supply to the Peltier effect thermoelectric module (1_{d}) associated with the detection surface and/or the power supply to the means used for generating the reference signal in such a manner as to tend to cancel said error signal.

10. A device according to claim 9, characterized by the fact that said means for modifying the electrical power supply modify current amplitude.

11. A device according to claim 9, characterized by the fact that said means for modifying electrical power supply modify current duty ratio.

12. The use of a detector device as defined in any one of claims 1 to 11 to measure the energy of an incident beam falling on the detection surface.
